# EUROPEAN PATENT SPECIFICATION

(11) **EP 1 245 868 B1**
(45) Date of publication and mention of the grant of the patent: **12.12.2007**
(21) Application number: 02252176.9
(22) Date of filing: 26.03.2002
(51) Int. Cl.: F16H 25/22

(54) **Ball screw mechanism**
Kugelumlaufspindeltrieb
Mécanisme de vis à billes

(30) Priority: 30.03.2001 JP 2001098361
(43) Date of publication of application: 02.10.2002
(73) Proprietor: NTN Corporation, Osaka-shi, Osaka 550-0003 (JP)
(72) Inventor: Shibata, Yasushi, NTN Corporation, Iwata-shi, Shizuoka 438-0037 (JP); Ushida, Kimihito, NTN Corporation, Iwata-shi, Shizuoka 438-0037 (JP)
(74) Representative: Jenkins, Peter David

(56) References cited:
- DE-A- 2 627 025
- US-A- 2 505 131
- US-A- 2 783 656
- US-A- 3 529 486
- PATENT ABSTRACTS OF JAPAN vol. 018, no. 112 (M-1565), 23 February 1994 (1994-02-23) & JP 05 306741 A (NTN CORP), 19 November 1993 (1993-11-19)
- PATENT ABSTRACTS OF JAPAN vol. 2000, no. 10, 17 November 2000 (2000-11-17) & JP 2000 199556 A (TSUBAKI NAKASHIMA CO LTD), 18 July 2000 (2000-07-18)

## Description

The present invention relates to a ball screw mechanism of a type in which a spacer is interposed between neighboring balls.

The ball screw mechanism is known in which a series of balls are rollingly accommodated in a helical ball rolling passage that is defined by helical grooves formed respectively in an elongated screw shaft and a nut member mounted on the screw shaft and that is substantially closed by a ball inverting passage defined in the nut member has opposite ends communicating with the rolling passage to thereby complete a substantially closed ball recirculating passageway. The ball screw mechanism is currently available in various types depending on how the balls are recirculated or the type of the ball inverting passage; a return tube type, a guide plate type, an end cap type and a deflector type. Those types of the ball screw mechanisms have their own unique operating characteristics.

DE 26 27 025A, showing the features of the preamble of claim 1, discloses an invention relating to a spacing body arranged between two rolling balls of a ball circuit of a screw connection as part of a ball screw mechanism. This type of spacing body serves essentially to prevent wear of the rolling balls.

US-A-2,505,131 relates to a ball nut and screw assembly in which the screw and nut are provided with corresponding grooves forming a helical passage containing balls, which constitute the screw thread connection between the screw and nut. A limited number of balls is re-circulated through the helical passage by means of a transfer tube.

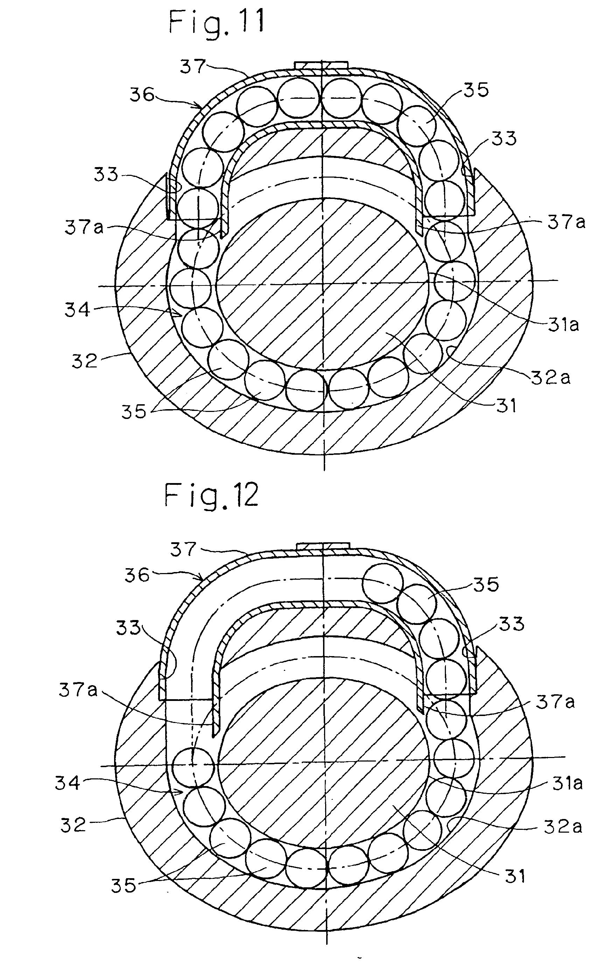

Fig. 11 illustrates the ball screw mechanism of the return tube type, which includes a nut member 32 axially movably mounted on a screw shaft 31 having a helical groove 31a defined on an outer peripheral surface thereof. As shown therein, the nut member 32 has a helical groove 32a defined in an inner peripheral surface thereof and has circumferentially spaced upright bores 33, for receiving opposite ends of a generally U-shaped return tube 37, defined in the wall of the nut member 32 in phase matched relation with the helical groove 32a so as to extend across the wall of the nut member 32 from an outer peripheral surface thereof to the helical groove 32a. The opposite ends of the return tube 37 are fixedly inserted into the upright bores 33 to thereby define a ball inverting passage 36 so that the balls 35 within the rolling passage 34 defined between the helical grooves 31a and 32a in the ball screw 31 and the nut member 32, respectively, can be recirculated in such a way as to enter successively into the return tube 37 from the rolling passage 34 through one of the opposite ends of the return tube 37 and then to emerge successively from the return tube 37 into the rolling passage 34 through the other of the opposite ends thereof after having moved through the ball inverting passage 36 inside the return tube 37.

The return tube 37 is generally employed in the form of a tubular member prepared from a metal sheet by the use of a press work or a pipe bent to represent a generally U-shape configuration, with each of the opposite ends thereof formed with a tongue 37a for positively directing the balls 35 inside the rolling passage 34 into the ball inverting passage 36. Although each of the tongues 37a is so designed and so tailored as to be continued from or to the shape of the helical groove 31a of the screw shaft 31 as smoothly as possible, it has been found that much difficulty has been encountered in keeping the consistently phase matched relation in position between each tongue 37a and the helical groove 31a of the screw shaft 31 because of machining errors occurring in boring to define the upright bores 33, tube bending or press work.

An error in phase of each tongue 37a relative to the helical groove would not be problematic so long as standard ball screw mechanisms are concerned. However, in the ball screw mechanism of the type to which the present invention is addressed, that is, the type in which a spacer (not shown in Fig. 11) is employed and positioned in between the neighboring balls accommodated within the substantially closed ball recirculating passageway, such an error cannot be negligible because the ball screw mechanism would otherwise fail to operate smoothly. The spacer interposed between the neighboring balls is used for minimizing a frictional wear of each ball which would result from the frictional contact of the neighboring balls then rotating arbitrarily in opposite directions to each other within the ball recirculating passageway. The ball screw mechanism of this particular type is disclosed in, for example, the Japanese Laid-open Patent Publication No. 2000-199556.

In the ball screw mechanism utilizing the spacers each interposed between the neighboring balls, since each spaces is not spherical in shape such as represented by the ball, some of the spacers are apt to be seized or caught by particularly one of the tongues that is positioned at a ball entry region through which the balls successively enter the ball inverting passage and, hence, the return tube 37. By way of example, if as a result of displacement in phase of the tongues 37a and/or a machining deviation of the depth of the upright bores 33, the tongues 37a are spaced a substantial distance from the helical groove 31 a, it often occurs that when successively entering the return tube 37 together with the balls 35 some of the spacers would be seized or caught by the tongue 37a and/or an outer periphery of some of the spacers would be chipped or ground in contact with a tip of the tongue 37a. As a matter of course, once the spacers are seized or caught in the manner discussed above, the ball screw mechanism will fail to operate smoothly.

The above discussed problems are also equally found not only in the return tube type, but also in the ball screw mechanism of the guide plate type.

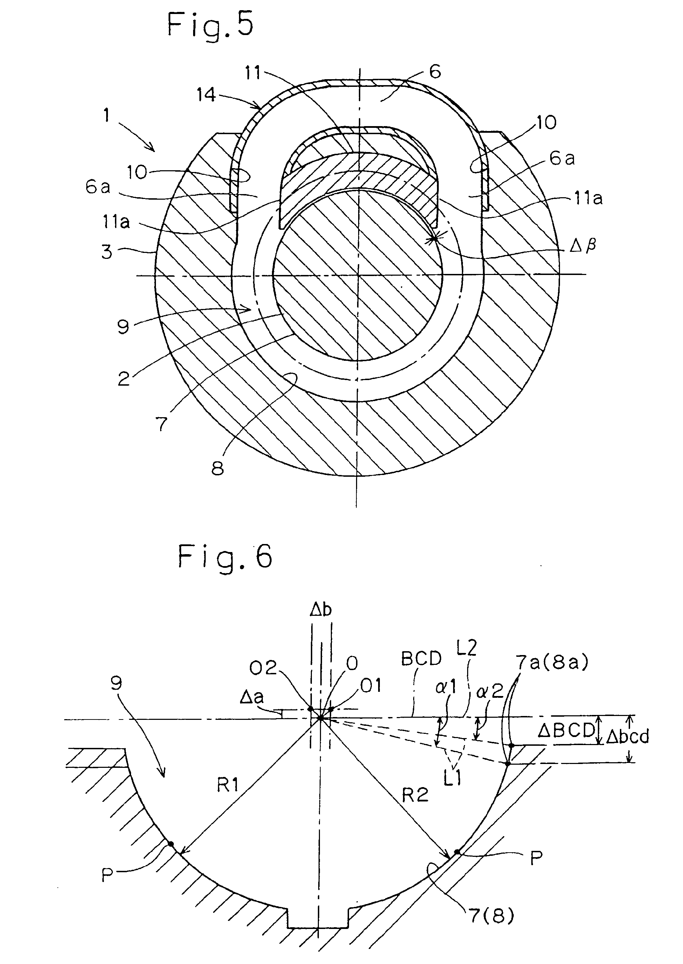

The helical groove employed in the ball screw mechanism is, as shown in Fig. 6, generally of a Gothic arch shape defined by two arches R1 and R2 having respective centers of curvature O1 and O2 that are offset relative to each other. The use of the Gothic arch shape allows each of the balls to point-contact the groove defining wall surface at two points P, thereby lessening the frictional contact between each ball and the groove defining wall surface. The centers of curvature O1 and O2 of the Gothic arch shape represented by the helical groove are offset a predetermined distance Δa relative to each other in a radial direction from a ball center diameter BCD occupied by respective geometric centers O of the balls then accommodated within the helical ball rolling passage that is defined by the helical groove 7 of the screw shaft and the helical groove 8 of the nut member and are also offset a predetermined distance Δb in an axial direction from the ball center diameter BCD.

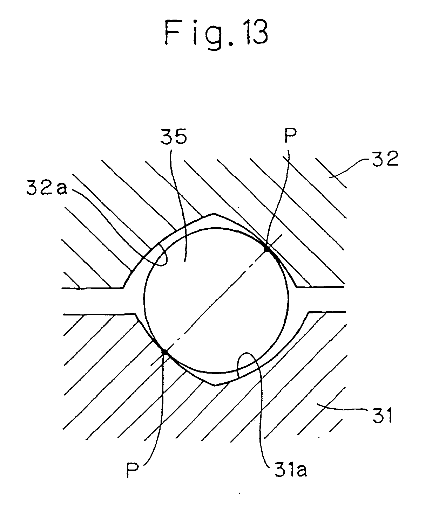

Considering the relation between the ball center diameter BCD and the outer periphery of the screw shaft, and in order for the ball screw mechanism to support a relatively large load, it is a general practice to design the helical groove in the screw shaft to have a relatively large depth (by positioning opposite shoulders of the helical groove at a depthwise position shown by ΔBCD as compared with the normally employed depthwise position Δbcd) and, also, the spacing between the contact points P and P to have a relatively large distance. The reason therefore is that when the ball screw mechanism is loaded with a load, the helical groove in the screw shaft and the helical groove in the nut member are generally displaced axially relative to each other with the ball contact points P consequently shifted radially outwardly of the screw shaft (see Fig. 13) and, also, the ellipse of ball contact is formed under the load in the vicinity of the ball contact points P. If the ellipse of ball contact comes to the opposite shoulders of the helical groove, a premature damage is likely to occur. In such case, the design in which as shown in Fig. 6 the angle defined between the ball centers O and each of the shoulders of the helical groove is chosen to be of a small value as indicated by α2 makes it possible to increase the depth of the helical groove to a value greater than that afforded when such angle is chosen to be a value indicated by α1, allowing the ball screw mechanism advantageously to support a high bearing load.

However, considering that in the ball screw mechanism the ball entry region is defined for the ball inverting passage, interference would be apt to occur at the time of entry of each of the balls into the ball inverting passage if the helical groove has a substantial depth. Particularly where the spacers are employed each between the neighboring balls, there is a relatively high possibility that the spacers would be seized or caught by the tongue under the influence of such interference. It is to be noted that if the contact angle α between the ball center diameter BCD and each of the shoulders of the helical groove is too small, interference with an inner peripheral surface of the nut member would be likely to occur.

In general, as shown in Fig. 12, the ball entry region through which the balls 35 successively enters the ball inverting passage 36 is defined at a location where each of the balls 36 can be picked up or guided into the ball inverting passage 36 in a direction tangential to the circumference of the root of the helical groove 32a in the nut member 32. However, the grooves 31a and 32a employed in the ball screw mechanism extend helically and have a lead angle in a direction axially thereof. If the lead angle is large, the load in the axial direction increase and, as a result, the balls 35 tend to contact the helical groove 31a of the screw shaft 31 at respective locations adjacent the outer periphery of the helical groove defining surface, thus requiring a margin in which the balls can move. In other words, it is necessary to secure the margin by increasing the size of the upright bores 33 for insertion of the return tube 37. Where no margin is available, the balls 35 will be jammed with an excessive load imposed on the spacer that is interposed between the neighboring balls, eventually resulting in breakage of such spacer. The greater the lead angle is, the more often the phenomenon in which the balls are jammed at the ball entry region as discussed above is apt to occur. Accordingly, in the ball screw mechanism in which the spacers are employed each between the neighboring balls, the spacers are susceptible to breakage as a result of the jamming of the balls and, therefore, the large lead angle is undesirable. Where the lead angle is relatively large, the necessity would occur that the nut member 32 must have a greater outer diameter than necessary in order for the margin to be defined for the balls 35.

Accordingly, the present invention is intended to provide a ball screw mechanism in which the phase relation between the ball entry region and the helical groove can be easily managed to substantially eliminate the possibility of the spacer being seized or caught at the ball entry region and which, despite the fact that the ball screw mechanism employs the spacers each between the neighboring balls, provides a smooth rotational performance.

It is another important aim of the present invention to provide the ball screw mechanism of the type employing the spacers each between the neighboring balls, which is substantially free from the problem associated with the spacers being seized or caught during a high speed rotation and which is robust.

In order to accomplish these aims, the present invention provides a ball screw mechanism which includes a screw shaft having a first helical groove defined in an outer peripheral surface thereof; a nut member mounted externally on the screw shaft and having a second helical groove defined in an inner peripheral surface thereof; a series of balls movably accommodated within a helically extending ball rolling passage defined by and between the first and second helical grooves; a spacer interposed between the neighboring balls and having its opposite surfaces inwardly recessed to receive portions of the balls on respective sides thereof; a ball inverting passage defined in the nut member and cooperable with the ball rolling passage to thereby define a generally closed ball recirculating passageway. The ball inverting passage referred to above has a ball entry region defined at each end thereof. The spacer referred to above has a cylindrical peripheral surface. The ball screw mechanism also includes a deflector having ball entry guide faces defined by respective opposite ends thereof. This deflector is firmly engaged in the second helical groove of the nut member with the ball entry guide faces positioned adjacent the associated ball entry regions of the ball inverting passage. The gap delimited between each of the opposite ends of the deflector where the ball entry region is positioned and the first helical groove of the screw shaft is of a size greater than zero and not greater than 15% of a diameter of each of the balls.

According to the present invention, the deflector is engaged in the helical groove of the nut member and is matched with the phase of the helical groove of the nut member.

The phase of the helical groove of the screw shaft and that of the helical groove of the nut members are matched with each other by means of the balls accommodated in between the helical grooves of the screw shaft and the nut member. Since the phase of the helical groove of the nut member and that of the deflector are matched with each other, the phase of the helical groove of the screw shaft and the phase of the deflector are also matched with each other through the balls. Thus, since the ball entry guide faces are defined by opposite end faces of the deflector that is engaged in the helical groove of the nut member, a phase control is easier to perform than that in the case of the ball screw mechanism of the return tube type which is susceptible to deviation as a result of an error in phase of the tongues of the return tube relative to the helical groove of the nut member and a machining error. Also, a control of the gap between the helical groove of the screw shaft and the deflector is easy to achieve. As such, the possibility of the spacers being seized or caught at the ball entry regions can advantageously be avoided, permitting the ball screw mechanism to exhibit a smooth rotation.

In a preferred embodiment of the present invention, the ball inverting passage may be defined by a return tube. In an alternative preferred embodiment, the ball inverting passage may be defined by a ball passage groove defined in a rear surface of a guide plate mounted on a portion of an outer periphery of the nut member.

The ball screw mechanism of the return tube type is advantageous in that it can be mass-produced while the ball screw mechanism of the guide plate type is advantageous in that the nut member employed therein can have a reduced outer diameter. However, if the spacers are employed in any of those types, a problem often occurs that the spacers may be seized or caught at the ball entry regions as the balls together with the spacers enter the ball inverting passage. Accordingly, employment of the design in which the ball entry guide faces are provided for by the deflector engaged in the helical groove of the nut member such as achieved in the present invention is effective to substantially eliminate the possibility of the spacers being seized or caught at the ball entry regions to thereby allow the ball screw mechanism to exhibit a smooth rotating performance while securing the advantages exhibited by any one of the return tube type and the guide plate type and also securing an advantage brought about by a low friction imposed by the spacers.

If the gap is of a size greater than 15% of the diameter of each ball, the spacers will be seized or caught in this gap, resulting in damages to the spacer and also obstruction to a smooth recirculation of the ball in the ball screw mechanism. On the other hand, if this gap is of a size equal to zero or a minus value, the deflector will contact the helical groove of the screw shaft, thereby hampering a smooth recirculation of the balls in the ball recirculating passageway. More preferably, the gap is of a size within the range of 3 to 10% of the diameter of each of the balls. The use of the deflector in the ball screw mechanism makes it possible to control this gap.

Also, in another preferred embodiment of the present invention, the first and second helical grooves are preferably such that when viewed in a longitudinal sectional representation of the ball screw mechanism, the angle defined between first and second imaginary straight lines, the first imaginary straight line connecting a shoulder of each of the first and second helical groove and a ball center while the second imaginary straight line passing through the ball center and extending parallel to the longitudinal axis of the ball screw mechanism, is chosen to be within the range of 15 to 30° about the ball center or a cross sectional center of the ball rolling passage.

If the angle subtended by the shoulder is too great, the ball contact point will reside on the groove shoulder under a high bearing load, resulting in a risk of a premature damage. Conversely, if the angle is too small, the helical groove will have a large depth, making the spacers to be seized or caught when the balls are successively guided into the ball inverting passage. For this reason, the angle is preferably within the range of 15 to 30° as discussed above, and selection of this particular range is effective not only to avoid any possible premature damage resulting from the ball contact points residing on the shoulders of the helical groove during a high bearing load, but also to refrain the depth of the helical groove from being increased, to thereby avoid the balls and the spacers from being seized or caught by the shoulder as they enter successively into the ball inverting passage. More preferably, the angle referred to above is within the range of 20 to 25°.

In the practice of the present invention, as viewed in a longitudinal sectional representation of the ball screw mechanism each of the ball entry regions has a ball entry angle that is preferably chosen to be within the range of 15 to 35°.

If the ball entry angle is too small, the ball passage width is narrowed at the ball entry regions and, accordingly, the spacers will be apt to be seized or caught enough to hamper a smooth operation of the ball screw mechanism. On the other hand, considering that the ball entry angle defines a point of inflection in the ball recirculating passageway, if the ball entry angle is too great, the spacers will be apt to be seized or caught in the event of a high speed rotation of the ball screw mechanism. Because of these reasons, the ball entry angle is preferred to be within the range of 15 to 35° and selection of this particular angle range is effective to secure a sufficient ball passage sectional area at each of the ball entry regions and also to avoid any possible seizure of the spacer by each of the ball entry region during a high speed rotation while the angle of inflection from the ball rolling passage to the ball inverting passage by way of each ball entry region will not become too large. This ball entry angle may be more preferably within the range of 20 to 30°.

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a perspective view, with a portion cut away, showing a ball screw mechanism according to a preferred embodiment of the present invention;
Fig. 2 is a transverse sectional view, on an enlarged scale, of the ball screw mechanism shown in Fig. 1;
Fig. 3 is a fragmentary transverse sectional view, on a further enlarged scale, of the ball screw mechanism shown in Fig. 1, showing one of spacers positioned between the neighboring balls;
Fig. 4A is a schematic perspective view of a deflector employed in the ball screw mechanism;
Fig. 4B is a schematic perspective view of a modified form of the deflector employed in the ball screw mechanism;
Fig. 5 is a transverse sectional view of the ball screw mechanism, showing the relationship between a helical groove of a screw shaft and the deflector;
Fig. 6 is an explanatory diagram showing the geometry of the helical groove in the ball screw mechanism;
Fig. 7 is a transverse sectional view of the ball screw mechanism, showing the angle at which the balls successively enter a ball inverting passage;
Fig. 8 is a schematic longitudinal side view of the ball screw mechanism according to another preferred embodiment of the present invention;
Fig. 9 is a transverse sectional view, on an enlarged scale, of the ball screw mechanism shown in Fig. 8;
Fig. 10 is a schematic perspective view showing the deflector used in the ball screw mechanism shown in Fig. 8;
Fig. 11 is a transverse sectional view of the prior art ball screw mechanism;
Fig. 12 is a transverse sectional view of another prior art ball screw mechanism; and
Fig. 13 is a schematic explanatory diagram used to explain the relationship in position between helical grooves defined respectively in the screw shaft and the nut member under an excessively loaded condition.

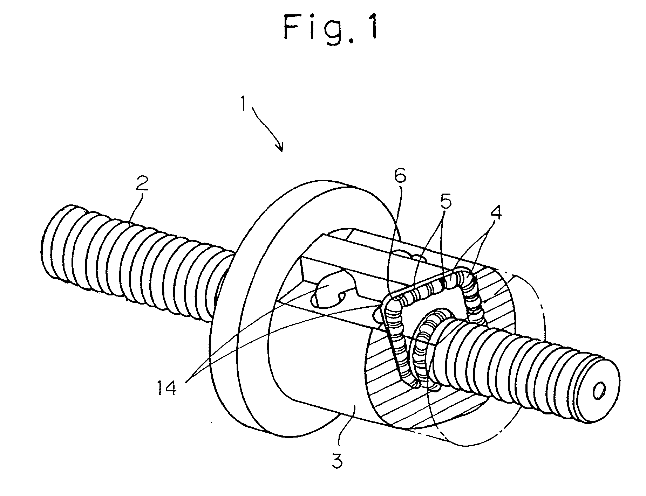

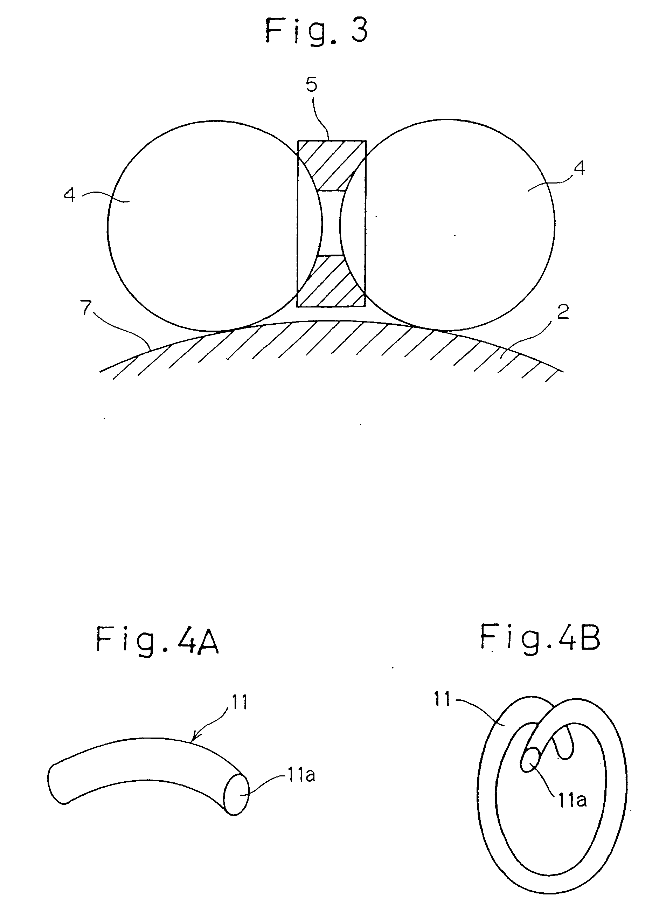

A ball screw mechanism according to a first preferred embodiment of the present invention will now be descried with reference to Figs. 1 to 7. As shown in a perspective view in Fig. 1, the ball screw mechanism 1 embodying the present invention includes a screw shaft 2, a nut member 3 mounted externally on the screw shaft 2 for movement in a direction axially of and relative to the screw shaft 2, a series of balls 4, a plurality of spacers 5 each interposed between the neighboring balls 4, and a plurality of, for example, two, generally U-shaped return tubes 14 each defining a ball inverting passage 6. The screw shaft 2 has its outer peripheral surface formed with a helically extending groove 7 while the nut member 3 has its inner peripheral surface formed with a helically extending groove 8 cooperable with the helical groove 7 to define a correspondingly helically extending ball rolling passage 9. As shown in Fig. 3, the balls 4 and the spacer 5 interposed between the neighboring balls 4 are accommodated in series within the helical ball rolling passage 9. Although each of the spacers 5 is preferably in the form of an annular ring spacer as best shown in Fig. 3, the spacer 5 may not be always limited thereto, but may be in the form of a disc having its opposite surfaces formed with a concave recess effective to receive therein a portion of the corresponding ball 4.

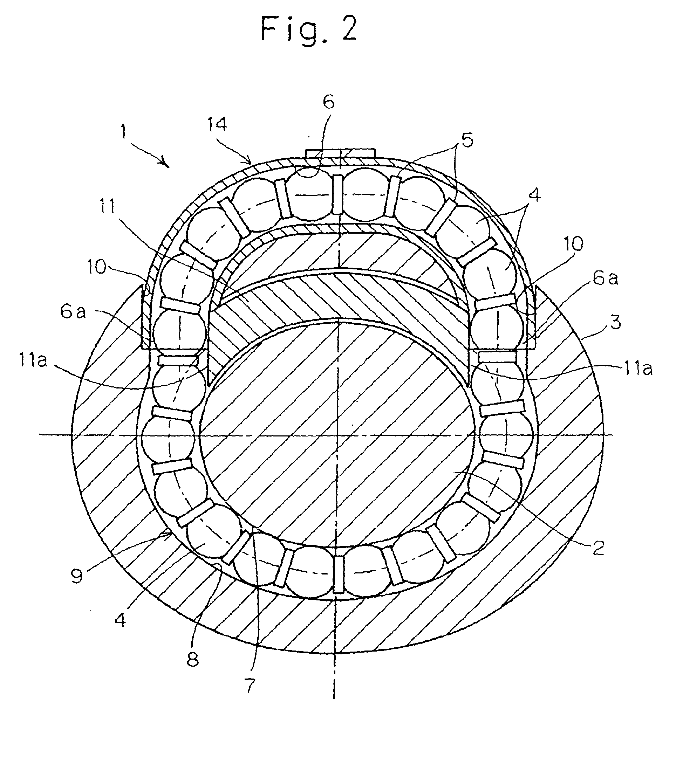

Referring to Figs. 1 and 2, each of the return tubes 14 is in the form of a tube having an inner diameter sufficient to allow the balls 4 to pass therethrough and has its opposite ends communicated with the ball rolling passage 9 so that the ball rolling passage 9 and the corresponding ball inverting passage 6 can altogether define a generally closed ball recirculating passageway in which the balls 5 recirculate together with the spacers 5. Although in the illustrated embodiment the two ball inverting tubes 14 are shown and, hence, the two ball recirculating passageways are employed in the nut member 3, the number of the ball recirculating passageways may not be limited to two, but may be one or more than two.

As best shown in Fig. 2, each of the return tubes 14 is externally mounted on the nut member 3 with its opposite ends firmly inserted into respective upright bores 10 each defined in the nut member 3 so as to extend completely across the wall of the nut member 3 in communication with the helical groove 8. It is to be noted that depending on the direction in which the screw shaft 2 is moved relative to the nut member 3, some of the balls 4 within the return tube 14, that is, the ball inverting passage 6, move in one of directions opposite to each other. Therefore, the ball inverting passage 6 defined in the return tube 14 has two ball entry regions 6a defined at opposite ends thereof that are communicated with the helical groove 8.

A deflector 11 is engaged in and positioned within a portion of the helical groove 8 of the nut member 3 with its opposite end faces located adjacent the ball entry regions 6a, respectively. It is to be noted that each of the end faces of the deflector 11 serves as a ball entry guide face 11a by which the balls 4 with the spacers 5 each intervening between the neighboring balls 4 can be successively picked up or guided from the ball rolling passage 9 into the ball inverting passage 6. This deflector 11 is in the form of a helical member extending helically so as to conform to the helix of the helical groove 8 of the nut member 3 and is fixedly secured internally to the nut member 3 by means of any suitable connecting means such as, for example, bolts or a bonding material. This deflector 11 may have a length short of one complete convolution of the helical groove 8 as shown in Fig. 4A or greater than one compete convolution of the helical groove 9 as shown in Fig. 4B, but has a length so chosen as to correspond to the length of each ball rolling passage 9 that encompasses single ball recirculating passageway. The deflector 11 is snugly and neatly engaged in the helical groove 8 of the nut member 3 in the manner described above, but is spaced from the helical groove 7 of the screw shaft 2 with a play gap left therebetween. The details of various component parts of the illustrated ball screw mechanism 1 will become clear from the following detailed discussion of the operation thereof.

In the ball screw mechanism 1 of the structure so far described, the deflector 11 is engaged in the helical groove 8 of the nut member 3 in phase matched relation to the helical groove 8 of the nut member 3. Respective phases of the helical groove 7 of the screw shaft 2 and the helical groove 8 of the nut member 3 are matched by the series of the balls 4 accommodated in part within the helical groove 7 and in part within the helical groove 8, that is, within the ball rolling passage 9. Considering that the phase of the helical groove 8 of the nut member 3 is matched with the phase of the deflector 11, it will readily be understood that the phase of the helical groove 7 of the screw shaft 2 is equally matched with the phase of the deflector 11 through the balls 4. As discussed above, since the ball entry guide faces 11a by which the balls 4 with the spacers 5 can be successively picked up or guided from the ball rolling passage 9 into the ball inverting passage 6 are provided for by the deflector 11 firmly engaged in the helical groove 8 of the nut member 3, not only can the phase control be performed more easily than that in the prior art design relying on the tongues of the return tube and susceptible to deviation as a result of the machining error occurring in the phase of the helical groove of the nut member 3, but a gap Δβ (See Fig. 5) between the helical groove 7 of the screw shaft 2 and the deflector 11 can also be controlled easily. For this reason, any possibility that some of the spacers 5 may be seized at the ball entry regions 6a can be avoided, allowing a smooth rotation of the ball screw mechanism 1.

The gap Δβ defined between the deflector 11 and the helical groove 7 of the screw shaft 2 as shown in Fig. 5 is of a size greater than zero and so chosen as to be equal to or smaller than 15% of the diameter of each of the balls 4. This gap Δβ extends over the entire length of the deflector 11 and is of the size specified above, but the specified size discussed above is applicable at each of the opposite ends of the deflector 11 where the ball entry regions 6a occupy.

In this way, a smooth operation of the ball screw mechanism 1 can be obtained with substantial elimination of the possibility of the spacers 5 being seized or picked up. If the gap Δβ is of a size equal to or smaller than zero, the deflector 11 will contact the helical groove 7 of the screw shaft 2, resulting in obstruction to a smooth recirculation of the ball screw mechanism 1. On the other hand, if the gap Δβ is of a size greater than 15% of the diameter of each ball 4, there is a high possibility that the spacers 5 may be seized into the gap Δβ, with the smooth recirculation of the balls 4 consequently hampered and/or some of the spacers 5 being damaged. As discussed above, the use of the deflector 11 makes it possible to achieve a satisfactory and easy control of the gap Δβ.

It is to be noted that the specified size of the gap Δβ discussed above can be equally applied even where the tongues are used in the prior art return tube. However, as compared with the use of the tube tongues in which a gap tend to increase as a result of the machining error, the use of the deflector is particularly advantageous in terms of control of the gap.

Each of the helical grooves 7 and 8 defined respectively in the screw shaft 2 and the nut member 3 has a cross-sectional shape as shown in Fig. 6, which represents a Gothic arch defined by two arches having respective radius of curvature R1 and R2, respective centers of curvature O1 and O2 being offset relative to each other. The centers of curvature O1 and O2 of those arches defining the Gothic arch occupy respective positions that are offset a predetermined distance Δa in a radial direction of the ball with respect to the path along which respective centers of the balls 4 accommodated between the helical grooves 7 and 8 move (i.e., the ball center diameter BCD) and are also offset a predetermined distance Δb in an axial direction.

In a longitudinal sectional representation of the ball screw mechanism 1, the helical grooves 7 and 8 of the screw shaft 7 and the nut member 3 has an angle α about the ball center O that is a geometric center of the ball rolling passage 9 formed by and between the helical grooves 7 and 8, which angle α is defined between first and second imaginary straight lines L1 and L2, the first imaginary straight line L1 connecting the associated shoulder 7a or 8a of the helical groove 7 or 8 while the second imaginary straight line L2 passing through the ball center O and extending parallel to the longitudinal axis of the ball screw mechanism. In the practice of the present invention, the angle α is chosen to be within the range of 15 to 30° about the ball center O. Selection of the particular range for the angle α is effective not only to avoid the possibility that the ball contact points P or the ellipse of ball contact may reside on the shoulders 7a or 8a resulting in a premature impairment when the ball screw mechanism is operated under a high bearing load, but also to avoid the possibility that, due to each of the helical grooves 7 and 8 having a depth not so great, some of the balls 4 may be trapped by the shoulders 7a or 8a when the balls 4 are ready to successively enter the return tube 14. In other words, if the angle α subtended by each of the shoulders 7a or 8a is greater than 30°, the ball contact points P will reside on the shoulders 7a or 8a under the high axial load, resulting in a premature impairment. On the other hand, if the angle α is smaller than 15°, each of the helical grooves 7 and 8 will have a large depth enough to allow the balls 4 to be seized or picked up when the balls 4 are ready to successively enter the ball inverting passage 6.

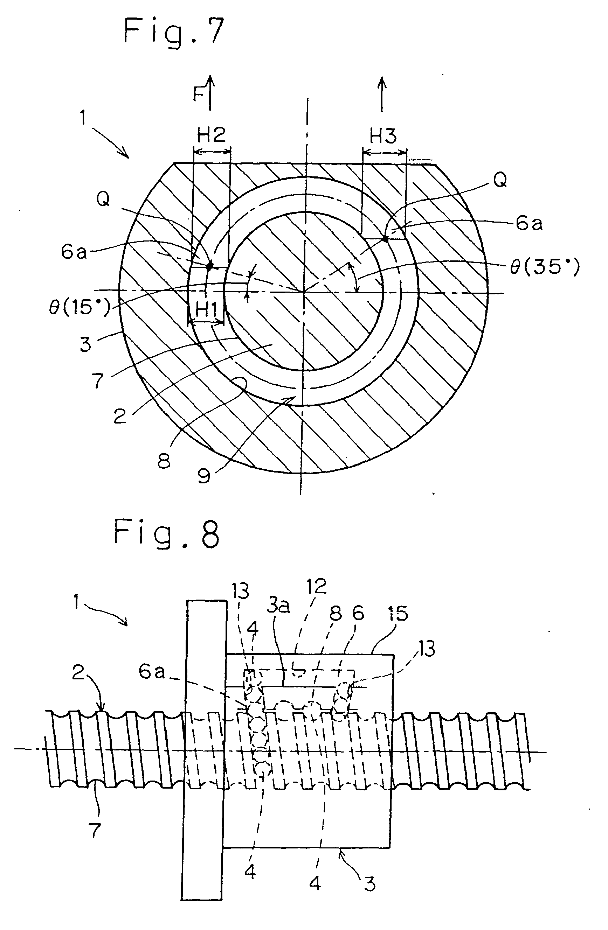

Also, in the illustrated embodiment, the ball entry angle θ (See Fig. 7) defined about the longitudinal axis of the screw shaft 2 and over which the balls 4 are successively guided from the ball rolling passage 9 to the ball inverting passage 6 is chosen to be within the range of 15 to 35°. The ball entry angle θ is defined as extending from a phase position at which as viewed in the longitudinal sectional representation of the ball screw mechanism 1 a radial direction lies perpendicular to the ball entry direction F of the corresponding ball entry region 6a in which the balls 4 successively enter the return tube 14, to a ball entry position Q at which the corresponding ball entry region 6a opens to the ball rolling passage 9. This ball entry angle θ represents an angle defined by the ball entry direction F relative to a tangential direction of the helical groove 8 in the nut member 3 at the ball entry position Q. Selection of the ball entry angle θ within the range of 15 to 35° is effective to allow the balls 4 to be smoothly guided into the ball inverting passage 6 without having the spacers 5 caught at the ball entry region 6a and, hence, ensures a smooth operation of the ball screw mechanism 1 by the reason which will now be described.

As shown in Fig. 7, assuming that the ball passage width at the ball entry region 6a is expressed by H1, H2 and H3 when the ball entry angle θ is 0°, 15° and 35°, respectively, then the relation of H3 > H2 > H1 is obtained. As can readily be understood from this, if the ball entry angle θ is small, the ball passage width is narrowed at the ball entry position Q and, accordingly, the gap between each ball 4 or each spacer 5 and an inner wall surface of a passage therefore becomes small. And when the ball entry angle θ is smaller than 15°, the above mentioned gap becomes too small enough to cause the spacers 5 to be easily caught, resulting in an obstruction to the smooth operation of the ball screw mechanism 1.

Also, since the ball entry position Q is the position defining a point of inflection of the ball passage, increase of the ball entry angle θ results in increase of the angle of inflection. Although the load borne by the balls 4 inside the ball rolling passage 9 during rotation of the ball screw mechanism 1 is diverted in a tangential direction of the ball center diameter at the point of inflection, the load acting on the ball entry guide faces 11a (Fig. 2) of the deflector 11 depends on a distribution of the load at the point of inflection of the balls 4. Since increase of the ball entry angle θ results in increase of the angle of inflection, the load imposed by the balls 4 on the ball entry guide faces 11a of the deflector 11 increases. Hence, if the ball entry angle θ exceeds 35°, the load on the ball entry guide faces 11a of the deflector 11 is too large and the ball entry guide faces 11a will become susceptible to damage. On the other hand, the angle of inflection becomes too large and, hence, the spacers 5 tend to be easily caught or seized, resulting in obstruction to the smooth operation of the ball screw mechanism 1. Because of the reason discussed above, the ball entry angle θ is preferred to be within the range of 15 to 35°.

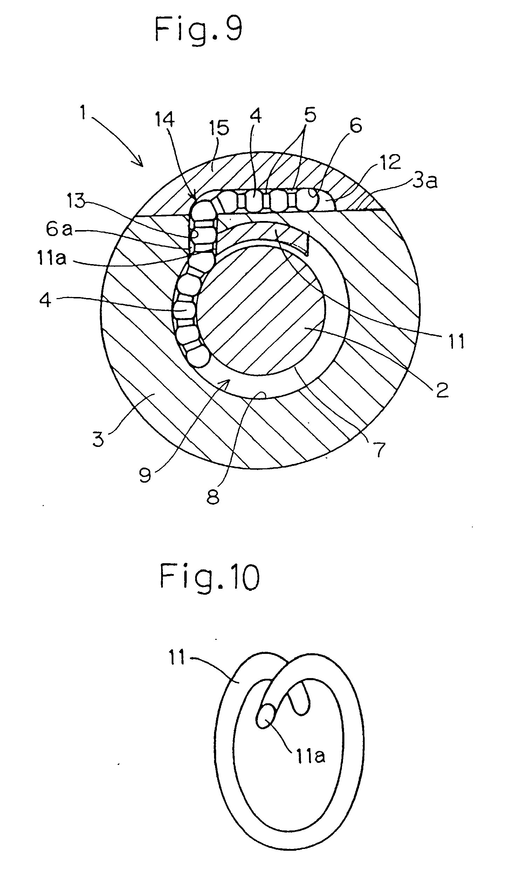

Figs. 8 and 9 illustrate the ball screw mechanism according to a second preferred embodiment of the present invention. The ball screw mechanism 1 shown therein is similar to the ball screw mechanism 1 shown in and described with reference to Figs. 1 to 7, except that it is of a guide plate type. Because of the guide plate type, the ball screw mechanism 1 includes a guide plate 15 fitted to a flat surface 3a defined in a portion of the outer periphery of the nut member 3. The guide plate 15 has its rear surface formed with a ball passage groove 12 defined therein and, when fitted on that flat surface 3a in the outer periphery of the nut member 3, defines the ball inverting passage 6 in cooperation with a portion of that flat surface 3a. This ball passage groove 12 has its opposite ends communicated with the helical groove 8 of the nut member 3 through respective bores 13 that define the ball entry regions 6a formed in a nut body of the nut member 3. The deflector 11 having ball entry guide faces 11a is firmly engaged in and positioned along the helical groove 8 of the nut member 3 with the ball entry guide faces 11a confronting the associated ball entry regions 6a. The deflector 11 employed in this illustrated embodiment is similar to that used in the ball screw mechanism 1 of the return tube type in the previously described embodiment and is in the form of a helical member conforming to the helix of the helical groove 8 as shown in, for example, Fig. 10.

Even in the embodiment shown in Figs. 8 and 9, the gap defined between each of the opposite ends of the deflector 11 that serve as the respective ball entry guide faces a and the helical groove 7 of the screw shaft 2 is of a size so chosen as to be equal to or smaller than 15% of the diameter of each of the balls 4 and is greater than zero. Also, each of the helical grooves 7 and 8 in the screw shaft 1 and the nut members 3 has the angle α shown in Fig. 6 within the range of 15 to 30° about the ball center. In addition, as viewed in the longitudinal section of the ball screw mechanism 1, even the ball entry angle θ (See Fig. 7) defined as hereinbefore described is chosen to be within the range of 15 to 35°.

Even in the ball screw mechanism 1 of the guide plate type, the ball entry guide faces 11a defined by the opposite end faces of the deflector 11 fitted in the helical groove 8 of the nut member 3 are disposed adjacent the associated ball entry regions 6a of the ball inverting passage 6 and, therefore, the phase relation between the ball entry guide faces 11a and the helical groove 8 of the nut member 8 can easily be controlled, with consequent elimination of the possibility of the spacers 5 being seized or caught at the ball entry regions 6a. Accordingly, even though the spacers 5 are employed, the ball screw mechanism 1 can provide a smooth rotating performance. This ball screw mechanism 1 of the guide plate type can provide other effects similar to those afforded by the ball screw mechanism of the return tube type.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A ball screw mechanism (1)which comprises a screw shaft having a first helical groove (7) defined in an outer peripheral surface thereof; a nut member (3) mounted externally on the screw shaft (2) and having a second helical groove (8) defined in an inner peripheral surface thereof, said first helical groove (7) and said second helical groove (8) cooperating with each other to define a helically extending ball rolling passage (9) therebetween; a series of balls (4) movably accommodated within the ball rolling passage (9); a spacer (5) interposed between the neighboring balls (4), said spacer (5) having its opposite surfaces inwardly recessed to receive portions of the balls (4) on respective sides thereof; and a ball inverting passage (6) defined in the nut member and cooperable with the ball rolling passage to thereby define a generally closed ball recirculating passageway, said ball inverting passage (11) having a ball entry region (13) defined at each end thereof, **characterized in:**
**that** the spacer (5) has a cylindrical peripheral surface; also
**that** there is provided a deflector (11) having ball entry guide faces (11a) defined by respective opposite ends thereof, said deflector (11) being firmly engaged in the second helical groove (8) of the nut member (3) with the ball entry guide faces positioned adjacent the associated ball entry regions of the ball inverting passage (6); also
in that a gap (Δβ) delimited between each of the opposite ends of the deflector (11) where the ball entry region (13) is positioned and the first helical groove (7) of the screw shaft is of a size greater than zero and not greater than 15% of a diameter of each of the balls (4).

2. The ball screw mechanism as claimed in Claim 1, **characterized in that** the ball inverting passage is defined by a return tube.

3. The ball screw mechanism (1) as claimed in Claim 1, **characterized in that** the ball inverting passage (6) is defined by a ball passage groove defined in a rear surface of a guide plate mounted on a portion of an outer periphery of the nut member (3).

4. The ball screw mechanism(1) as claimed in any one of Claims 1 to 3, **characterized in that** the first and second helical grooves (7,8) are such that when viewed in a longitudinal sectional representation of the ball screw mechanism (1), the angle defined between first and second imaginary straight lines, the first imaginary straight line connecting a shoulder of each of the first and second helical grooves (7,8) and a ball center while the second imaginary straight line passing through the ball center and extending parallel to the longitudinal axis of the ball screw mechanism (1), is chosen to be within the range of 15 to 30° about the ball center.

5. The ball screw mechanism as claimed in any one of Claims 1 to 4, **characterized in that** as viewed in a longitudinal sectional representation of the ball screw mechanism (1) each of the ball entry regions (13) has a ball entry angle that is chosen to be within the range of 15 to 35°.

## Patentansprüche

1. Kugelspindelmechanismus (1), umfassend eine Kugelspindel, die eine erste Spiralnut (7) aufweist, die in einer äußeren umfänglichen Oberfläche desselben definiert ist; ein Mutterelement (3), das äußerlich an der Kugelspindel (2) befestigt ist und eine zweite Spiralnut (8) aufweist, die an einer inneren umfänglichen Oberfläche desselben definiert ist, wobei die erste Spiralnut (7) und die zweite Spiralnut (8) in Wirkverbindung miteinander stehen, um zwischen ihnen eine sich spiralförmig erstreckende Kugellaufbahn (9) zu definieren; eine Reihe von Kugeln (4), die innerhalb der Kugellaufbahn (9) beweglich aufgenommen sind; ein Abstandhalter (5), der zwischen den benachbarten Kugeln (4) eingebracht ist, wobei entgegen gesetzte Oberflächen des Abstandhalters (5) nach innen vertieft sind, um Abschnitte der Kugeln (4) an ihren jeweiligen Seiten aufzunehmen; und eine Kugelumkehrungsbahn (6), die in dem Mutterelement definiert ist und mit der Kugellaufbahn in Wirkverbindung steht, um **dadurch** eine generell geschlossene Kugelrezirkulierungsbahn zu definieren, wobei die Kugelumkehrungsbahn (11) einen Kugeleinlassbereich (13) aufweist, der an jedem Ende derselben definiert ist,
**dadurch gekennzeichnet,**
**dass** der Abstandhalter (5) eine zylindrische umfängliche Oberfläche aufweist; dass ein Deflektor (11) vorgesehen ist, der Kugeleinlass-Führungsflächen (11a) aufweist, die durch die jeweiligen entgegen gesetzten Enden desselben definiert werden, wobei der Deflektor (11) fest mit der zweiten Spiralnut (8) des Mutterelements (3) in Eingriff steht und die Kugeleinlass-Führungsflächen den zugeordneten Kugeleinlassbereichen des Kugelumkehrungsbahn (6) benachbart positioniert sind;
**dass** eine Lücke (Δβ) zwischen jedem der entgegengesetzten Enden des Deflektors (11) begrenzt ist, wo der Kugeleinlassbereich (13) positioniert ist und die Größe der ersten Spiralnut (7) der Kugelspindel größer als Null und nicht größer als 15 % des Durchmessers jeder der Kugeln (4) ist.

2. Kugelspindelmechanismus nach Anspruch 1, **dadurch gekennzeichnet, dass** die Kugelumkehrungsbahn durch ein Rücklaufrohr definiert wird.

3. Kugelspindelmechanismus (1) nach Anspruch 1, **dadurch gekennzeichnet, dass** die Kugelumkehrungsbahn (6) durch eine Kugeldurchlassnut definiert wird, die an einer hinteren Oberfläche einer Führungsplatte, die an einem Abschnitt eines äußeren Umfangs des Mutterelements (3) befestigt ist, definiert wird.

4. Kugelspindelmechanismus (1) nach einem der Ansprüche 1 bis 3, **dadurch gekennzeichnet, dass** die erste und die zweite Spiralnut (7,8) so ausgebildet sind, dass, wenn in einer längs verlaufenden Schnittdarstellung des Kugelspindelmechanismus (1) betrachtet, der Winkel, der zwischen der ersten und zweiten imaginären Geraden definiert ist, wenn die erste imaginäre Gerade die Schulter jeder der ersten und zweiten Spiralnut (7,8) und ein Kugelzentrum verbindet, während die zweite imaginäre Gerade durch das Kugelzentrum verläuft und sich parallel zu der längs verlaufenden Achse des Kugelspindelmechanismus (1) erstreckt, so gewählt wird, dass er etwa innerhalb eines Bereichs von 15 bis 30° um das Kugelzentrums liegt.

5. Kugelspindelmechanismus nach einem der Ansprüche 1 bis 4, **dadurch gekennzeichnet, dass** jeder Kugeleinlassbereich (13), wenn in einer längs verlaufenden Schnittdarstellung des Kugelspindelmechanismus (1) betrachtet, einen Kugeleinlasswinkel aufweist, der so gewählt ist, dass er sich in einem Bereich von 15 bis 35° befindet.

## Revendications

1. Mécanisme (1) de vis à billes qui comporte un arbre à vis ayant une première gorge hélicoïdale (7) définie dans une surface périphérique extérieure de celui-ci ; un élément à écrou (3) monté extérieurement sur l'arbre à billes (2) et ayant une seconde gorge hélicoïdale (8) définie dans une surface périphérique intérieure de cet élément, ladite première gorge hélicoïdale (7) et ladite seconde gorge hélicoïdale (8) coopérant l'une avec l'autre pour définir entre elles un passage (9) de roulement de billes s'étendant en hélice ; une série de billes (4) logées de façon mobile dans le passage (9) de roulement de billes ; une entretoise (5) interposée entre les billes voisines (4), ladite entretoise (5) ayant ses surfaces opposées creusées intérieurement pour recevoir des parties des billes (4) sur des côtés respectifs de celles-ci ; et un passage (6) d'inversion de billes défini dans l'élément à écrou et pouvant coopérer avec le passage de roulement de billes pour définir ainsi un passage globalement fermé de recirculation de billes, ledit passage (11) d'inversion de billes ayant une région (13) d'entrée de billes définie à chacune de ses extrémités, **caractérisé en ce que** :
l'entretoise (5) a une surface périphérique cylindrique ; en outre
il est prévu un déflecteur (11) ayant des faces (11a) de guidage d'entrée de billes définies par des extrémités opposées respectives de celui-ci, ledit déflecteur (11) étant engagé fermement dans la seconde gorge hélicoïdale (8) de l'élément à écrou (3) de façon que les faces de guidage d'entrée de billes soient positionnées de manière à être adjacentes aux régions associées d'entrée de billes du passage (6) d'inversion de billes ; et en outre
un intervalle (Δβ), délimité entre chacune des extrémités opposées du déflecteur (11), où la région d'entrée (13) de billes est positionnée, et la première gorge hélicoïdale (7) de l'arbre à vis est d'une dimension supérieure à zéro et non supérieure à 15 % d'un diamètre de chacune des billes.

2. Mécanisme de vis à billes selon la revendication 1, **caractérisé en ce que** le passage d'inversion de billes est défini par un tube de retour.

3. Mécanisme (1) de vis à billes selon la revendication 1, **caractérisé en ce que** le passage (6) d'inversion de billes est défini par une gorge de passage des billes définie dans une surface arrière d'une plaque de guidage montée sur une partie d'une périphérie extérieure de l'élément à écrou (3).

4. Mécanisme (1) de vis à billes selon l'une quelconque des revendications 1 à 3, **caractérisé en ce que** les première et seconde gorges hélicoïdales (7, 8) sont telles que, lorsqu'elles sont vues dans une représentation en coupe longitudinale du mécanisme (1) de vis à billes, l'angle défini entre des première et seconde lignes droites imaginaires, la première ligne droite imaginaire reliant un épaulement de chacune des première et seconde gorges hélicoïdales (7, 8) et un centre de bille, tandis que la seconde ligne droite imaginaire passe par le centre de la bille et s'étend parallèlement à l'axe longitudinal du mécanisme (1) de vis à billes, est choisi de manière à être compris dans la plage de 15 à 30° par rapport au centre de la bille.

5. Mécanisme de vis à billes selon l'une quelconque des revendications 1 à 4, **caractérisé en ce que**, lorsqu'elle est vue dans une représentation en coupe longitudinale du mécanisme (1) de vis à billes, chacune des régions (13) d'entrée de billes présente un angle d'entrée de billes qui est choisi de façon à être compris dans la plage de 15 à 35°.
